# EUROPÄISCHE PATENTSCHRIFT

(11) **EP 4 249 220 B1**
(45) Veröffentlichungstag und Bekanntmachung des Hinweises auf die Patenterteilung: **10.06.2026**
(21) Anmeldenummer: 23162827.2
(22) Anmeldetag: 20.03.2023
(51) Int. Cl.: B29C 65/30, B29C 65/22, B65B 11/58, B65B 51/12, B65B 51/14, B65B 59/00, B65B 59/02

(54) **VORRICHTUNG ZUM VERSCHWEISSEN ZWEIER SICH ÜBERLAPPENDER UND AUF EINER SEITE EINES GUTSTAPELS, VORZUGSWEISE AUF DER OBERSEITE EINES GUTSTAPELS, BEFINDLICHER FOLIENABSCHNITTE ZUM BILDEN EINER UMHÜLLUNG**
DEVICE FOR WELDING TWO FILM SECTIONS THAT OVERLAP ONE ANOTHER AND ARE LOCATED ON ONE SIDE OF A STACK OF GOODS, PREFERABLY ON THE TOP SIDE OF A STACK OF GOODS, TO FORM A WRAPPING
DISPOSITIF POUR SOUDER DEUX SECTIONS DE FILM SE CHEVAUCHANT ET SE TROUVANT SUR UNE FACE D'UNE PILE DE MARCHANDISES, DE PRÉFÉRENCE SUR LA FACE SUPÉRIEURE D'UNE PILE DE MARCHANDISES POUR FORMER UNE ENVELOPPE

(30) Priorität: 21.03.2022 DE 202022101464 U
(43) Veröffentlichungstag der Anmeldung: 27.09.2023
(73) Patentinhaber: MSK - Verpackungs-Systeme GmbH, 47533 Kleve (DE)
(72) Erfinder:
(74) Vertreter: Dr. Stark & Partner Patentanwälte mbB

(56) Entgegenhaltungen:
- EP-A1- 3 885 110
- CA-A1- 2 324 141
- US-A- 3 067 309

## Beschreibung

Die Erfindung betrifft eine Vorrichtung zum Verschweißen zweier sich überlappender und auf einer Seite eines Gutstapels, vorzugsweise auf der Oberseite eines Gutstapels, befindlicher Folienabschnitte zum Bilden einer Umhüllung, wobei die Vorrichtung einen Schweißbalken mit einer in Richtung der zu verschweißenden Folienabschnitte ausgerichteten Schweißfläche aufweist, wobei der Schweißbalken zumindest im Bereich seiner beiden Enden jeweils eine Lagerung aufweist und wobei zum Verschweißen der Folienabschnitte der Abstand zwischen dem Schweißbalken und den zu verschweißenden Folienabschnitten bis hin zum Kontakt verringerbar ist.

In der Praxis können Gutstapel nicht unbeachtliche Abmessungen aufweisen. So kann beispielsweise ein aus Gipskartonplatten bestehender Gutstapel eine Länge von mehr als 5 m und eine Breite von mehr als 2 m aufweisen. Aufgrund der Abmessungen ist ein Umhüllen mit einer Haube nicht möglich, da bei einer Haube entsprechende Öffnungsmaße schwer realisierbar sind. Daher wird als Umhüllung beispielsweise zunächst auf die Oberseite des Gutstapels eine Deckblattfolie aufgelegt und anschließend eine Folienbanderole um den Gutstapel herumgelegt. Die Folienbanderole ist so um den Gutstapel herum gelegt, dass die Folienbanderole unter Bildung eines Überstandes oberseitig übersteht. Der Überstand wird dann auf die Deckblattfolie umgelegt. Um eine hinreichende Wasserdichtigkeit zu gewährleisten, wird anschließend der Überstand der Folienbanderole und die Deckblattfolie mittels absenkbarer Schweißbalken verschweißt. Die Schweißbalken werden von oben auf die zu verschweißenden Folienabschnitte abgesenkt, bis die Schweißbalken mit ihrer Schweißfläche in Kontakt mit dem oberen Folienabschnitt sind. Bei einer solchen Ausgestaltung stellt die Deckblattfolie den einen Folienabschnitt und der Überstand der Folienbanderole den anderen (oberen) Folienabschnitt dar.

Aus der EP 3 885 110 A1 ist ein Verfahren zum Verschweißen zweier sich überlappender und auf der Oberseite eines Gutstapels befindlicher Folienabschnitte zum Bilden einer Umhüllung sowie eine Vorrichtung zum Verschweißen zweier sich überlappender und auf der Oberseite eines Gutstapels befindlicher Folienabschnitte zum Bilden einer Umhüllung bekannt. Die US-PS 3,067,309 beschreibt eine flexible Heißsiegeleinheit. Die CA 2 324 141 A1 beschreibt eine Vorrichtung zum Schweißen von thermoplastischen Teilen.

Als nachteilig erweist sich, dass die Oberseite des Gutstapels aufgrund der großen Abmessungen durchbiegt. Es ist aber auch durchaus möglich, dass die Oberseite des Gutstapels beispielsweise in der Mitte nach oben gewölbt ausgebildet ist. Dies hat zur Folge, dass sowohl bei einer durchgebogenen als auch bei einer nach oben gewölbten Oberseite des Gutstapels der Schweißbalken nicht auf seiner ganzen Länge seiner Schweißfläche, sondern nur mit seinen beiden Enden, auf dem Folienabschnitt aufliegt, so dass insoweit entlang der Schweißfläche eine gleichmäßige Versiegelung nicht an jedem Punkt möglich ist.

Aufgabe der Erfindung ist es, die vorgenannten Nachteile zu vermeiden und eine Vorrichtung anzugeben, die ein besseres Verschweißen zweier sich überlappender Folienabschnitte auf einer Seite, beispielsweise auf der Oberseite eines Gutstapels, ermöglicht, sofern die betreffende Seite des Gutstapels entlang der beabsichtigten Verschweißung konkave und/oder konvexe Bereiche aufweist.

Diese Aufgabe wird dadurch gelöst, dass zumindest die Schweißfläche des Schweißbalkens zur Anpassung der Schweißfläche an einen konkaven Verlauf und/oder an einen konvexen Verlauf der Seite des Gutstapels zwischen ihren beiden Enden elastisch verformbar ausgebildet ist und dass dem Schweißbalken zwischen den beiden Lagerungen zur Anpassung des Verlaufs der Schweißfläche an einen konkaven und/oder an einen konvexen Verlauf der Seite des Gutstapels wenigstens eine, vorzugsweise zumindest in Richtung der zu verschweißenden Folienabschnitte wirkende, Verlagerungseinrichtung zugeordnet ist und dass bei zumindest einer Lagerung und/oder bei zumindest einer Verlagerungseinrichtung der Kontaktbereich, mit dem diese Lagerung bzw. diese Verlagerungseinrichtung auf den Schweißbalken wirkt, in Längserstreckung des Schweißbalkens gesehen entlang des Verlaufs des Schweißbalkens verlagerbar ist, und dass die Vorrichtung für zumindest eine Verlagerungseinrichtung, vorzugsweise für alle Verlagerungseinrichtungen, eine Steuerung umfasst, wobei jede Verlagerungseinrichtung des Schweißbalkens individuell steuerbar ist, so dass die Krümmung des Schweißbalkens für das anschließende Verschweißen der überlappenden Folienabschnitte an die Kontur der Seite des Gutstapels im Bereich der miteinander zu verschweißenden Folienabschnitte anpassbar ist.

Vor dem Schweißvorgang ist der Schweißbalken parallel zu der Seite des Gutstapels ausgerichtet, an der die Folienabschnitte verschweißt werden sollen. Dies ist die Ruhestellung. In der Ruhestellung ist der Schweißbalken in einem Abstand zu den zu verschweißenden Folienabschnitten angeordnet. Zum Verschweißen der Folienabschnitte wird dann der Abstand zwischen dem Schweißbalken und den zu verschweißenden Folienabschnitten bis hin zum Kontakt in der Schweißposition verringert. Die Bewegungsrichtung jeder Verlagerungseinrichtung ist dabei ausschließlich orthogonal zur Ausrichtung der Seite des Gutstapels, an der sich die zu verschweißenden Folienabschnitte befinden.

Die Schweißfläche erstreckt sich vorzugsweise über die ganze Länge des Schweißbalkens. Die Länge der Schweißfläche des Schweißbalkens kann zwischen 100 cm und 300 cm, vorzugsweise zwischen 140 cm und 260 cm, betragen. Jede Lagerung ist dabei so ausgebildet, dass der Schweißbalken in Längserstreckung gesehen in Richtung der zu verschweißenden Folienabschnitte und/oder entgegen die Richtung der zu verschweißenden Folienabschnitte gekrümmt werden kann.

Sofern eine Verlagerungseinrichtung nur in Richtung der zu verschweißenden Folienabschnitte wirkt, kann die betreffende Verlagerungseinrichtung den Schweißbalken im Kontaktbereich nur gegen die zu verschweißenden Folienabschnitte drücken. Eine solche Ausgestaltung erlaubt das Verschweißen zweier Folienabschnitte, die sich im Bereich einer Kuhle beispielsweise der Oberseite des Gutstapels, d. h. in einem konkaven Bereich, befinden. Mittels der betreffenden Verlagerungseinrichtung wird der Schweißbalken auch im Bereich der Kuhle gegen die zu verschweißenden Folienabschnitte gedrückt, so dass auf ganzer Länge der Schweißbalken mit den zu verschweißenden Folienabschnitten in Kontakt ist.

Sofern eine Verlagerungseinrichtung auch entgegen der Richtung der zu verschweißenden Folienabschnitte, d. h. von den zu verschweißenden Folienabschnitten weg, wirkt, kann die betreffende Verlagerungseinrichtung den Schweißbalken in dem Kontaktbereich auch von der Seite des Gutstapels wegziehen.

Selbstverständlich kann die Vorrichtung auch mehrere der vorbeschriebenen Verlagerungseinrichtungen aufweisen. Dann ist auch ein sicheres Verschweißen auf ganzer Länge der Schweißfläche möglich, wenn die Seite des Gutstapels entlang der beabsichtigten Verschweißung konkave und konvexe Bereiche aufweist.

Dabei kann die Vorrichtung ferner eine Gutstapelverlagerungseinrichtung, vorzugsweise eine als Hebeeinrichtung ausgebildete Gutstapelverlagerungseinrichtung, zum Verlagern des Gutstapels in Richtung des Schweißbalkens zum Verschweißen aufweisen. Bei einer solchen Ausgestaltung kann der Schweißbalken im Bereich seiner beiden Lagerungen ortsfest angeordnet sein. Sollen im Bereich der Oberseite des Gutstapels Folienabschnitte zu verschweißen sein, wird der Gutstapel angehoben. Sollen im Bereich einer Seite des Gutstapels Folienabschnitte verschweißt werden, wird der Gutstapel seitlich gegen den Schweißbalken verfahren.

Zumindest eine der beiden Lagerungen, vorzugsweise beide Lagerungen, kann (können) zur Verlagerung des Schweißbalkens aus seiner Ruhestellung, in welcher der Schweißbalken in einem Abstand zu den zu verschweißenden Folienabschnitten angeordnet ist, in Richtung der Seite des Gutstapels in seine Schweißposition, in der der Schweißbalken mit dem oberen Folienabschnitt der beiden sich überlappenden und miteinander zu verschweißenden Folienabschnitte in Kontakt ist, als Verlagerungseinrichtung ausgebildet sein, wobei auch in diesem Fall die Vorrichtung für zumindest eine Verlagerungseinrichtung, vorzugsweise für alle Verlagerungseinrichtungen, eine Steuerung umfasst, wobei jede Verlagerungseinrichtung des Schweißbalkens individuell steuerbar ist, so dass die Krümmung des Schweißbalkens für das anschließende Verschweißen der überlappenden Folienabschnitte an die Kontur der Seite des Gutstapels im Bereich der miteinander zu verschweißenden Folienabschnitte anpassbar ist. Bei einer solchen Ausgestaltung kann der Gutstapel beispielsweise auf einem Kettenförderer stehen. Sollen im Bereich der Oberseite des Gutstapels zwei Folienabschnitte miteinander verschweißt werden, wird der Schweißbalken zum Verschweißen abgesenkt. Sollen im Bereich einer Seite des Gutstapels zwei Folienabschnitte miteinander verschweißt werden, wird der Schweißbalken zum Verschweißen seitlich gegen den Gutstapel bewegt. Nach dem Schweißvorgang wird der Schweißbalken wieder von dem Gutstapel weg, vorzugsweise aus seiner Schweißposition zurück in seine Ruhestellung, verlagert.

Der Schweißbalken kann als biegsame, vorzugsweise aus Aluminium bestehende, Schiene mit der in Richtung der zu verschweißenden Folienabschnitte ausgerichteten Schweißfläche ausgebildet sein. Selbstverständlich sind auch andere geeignete Materialien denkbar.

Dabei kann die Schweißfläche als Schweißdraht ausgebildet sein. In einem solchen Fall ist die Schweißfläche eher linienförmig ausgebildet und weist eine geringe Breite auf. Es sind aber auch andere Ausgestaltungen einer Schweißfläche möglich.

Der Schweißdraht kann zwischen den beiden Enden des Schweißbalkens gespannt sein, wobei der Schweißdraht entlang einer in Richtung der zu verschweißenden Folienabschnitte ausgerichteten Andrückfläche geführt ist. Damit ist der Schweißdraht in beide Durchbiegungsrichtungen des Schweißbalkens gespannt. Die Andrückfläche stützt den gespannten Schweißdraht beim Verschweißen.

Vorzugsweise ist der Schweißdraht durch eine Isolationsschicht von der Andrückfläche isoliert. Eine solche Ausgestaltung bietet sich an, wenn beispielsweise die Schiene aus einem leitfähigen Material, wie beispielsweise Aluminium, besteht. Die Andrückfläche und die Isolationsschicht können zweiteilig ausgebildet sein. Es ist aber auch durchaus möglich, dass die Andrückfläche die Isolationsschicht selbst bildet. Dann kann die Andrückfläche beispielsweise als Silikonband ausgebildet sein.

Um zu verhindern, dass der heiße Schweißdraht beim Verschweißen an dem oberen Folienabschnitt anklebt, bietet es sich an, wenn die Schweißfläche mit einer als Schutzschicht dienenden Ummantelung versehen ist.

Zumindest eine Lagerung und/oder zumindest eine Verlagerungseinrichtung kann (können) zur Verlagerung des Kontaktbereichs, mit dem diese Lagerung bzw. diese Verlagerungseinrichtung auf den Schweißbalken wirkt, verschiebbar an einer Schiene angeordnet sein. Die Schiene kann beispielsweise ein Element eines Anlagengerüsts sein. So kann (können) die Lagerung und/oder die Verlagerungseinrichtung beispielsweise jeweils an einem Schlitten befestigt sein, der auf der Schiene verfahrbar angeordnet ist.

Zumindest eine Schiene kann eine sich längs der Schiene erstreckende hinterschnittene Nut aufweisen, und die Lagerung und/oder die Verlagerungseinrichtung kann (können) jeweils zumindest einen mit der Nut zusammenwirkenden und in der Nut geführten Nutstein aufweisen. Ein Nutstein kann unmittelbar oder mittelbar - beispielsweise über ein Winkelstück - mit der Lagerung oder mit der Verlagerungseinrichtung verbunden sein. Bei der Schiene kann es sich beispielsweise um ein ITEM-Profil handeln.

Zumindest eine Lagerung und/oder zumindest eine Verlagerungseinrichtung kann (können) zur Ausrichtung gegenüber der zu verschweißenden Seite des Gutstapels manuell verlagerbar sein.

Zumindest eine Lagerung und/oder zumindest eine Verlagerungseinrichtung kann (können) selbstverständlich durch einen geeigneten Antrieb motorisch verlagerbar sein. So kann beispielsweise ein Antrieb vorgesehen sein, der eine umlaufende Kette antreibt, die auf die Lagerung und/oder die Verlagerungseinrichtung wirkt.

Zumindest eine Verlagerungseinrichtung kann als Zahnstange ausgebildet sein.

Zumindest eine Verlagerungseinrichtung kann als Zylinder ausgebildet sein.

Zumindest ein Zylinder kann als Pneumatikzylinder ausgebildet sein.

Zumindest ein Zylinder kann als Hydraulikzylinder ausgebildet sein.

Im Folgenden werden in den Zeichnungen dargestellte Ausführungsbeispiele der Erfindung erläutert. Es zeigen:
- Fig. 1: ein erstes Ausführungsbeispiel einer erfindungsgemäßen Vorrichtung mit einem eine konkave Oberfläche aufweisenden Gutstapel,
- Fig. 2: ein erstes Ausführungsbeispiel einer erfindungsgemäßen Vorrichtung mit einem eine konvexe Oberfläche aufweisenden Gutstapel,
- Fig. 3: ein zweites Ausführungsbeispiel einer erfindungsgemäßen Vorrichtung mit einem eine konkave Oberfläche aufweisenden Gutstapel,
- Fig. 4: ein zweites Ausführungsbeispiel einer erfindungsgemäßen Vorrichtung mit einem eine konvexe Oberfläche aufweisenden Gutstapel,
- Fig. 5: ein drittes Ausführungsbeispiel einer erfindungsgemäßen Vorrichtung mit einem eine konkave Oberfläche aufweisenden Gutstapel,
- Fig. 6a+b: eine schräge Draufsicht und eine Seitenansicht auf ein viertes Ausführungsbeispiel einer erfindungsgemäßen Vorrichtung,
- Fig. 7: eine Seitenansicht auf einen an einer Schiene angebrachten Schweißbalken,
- Fig. 8: einen Schnitt in Richtung VIII-VIII durch den Gegenstand nach Fig. 7,
- Fig. 9: eine Seitenansicht auf den Schweißbalken nach Fig. 7 ohne Schiene,
- Fig. 10: das Detail X aus Fig. 9,
- Fig. 11: eine Explosionsdarstellung des Schweißbalkens nach Fig. 7 in der Seitenansicht ohne Schiene,
- Fig. 12: eine schräge Ansicht auf den Gegenstand nach Fig. 11 und
- Fig. 13: das Detail XIII aus Fig. 12.

In allen Figuren werden für gleiche bzw. gleichartige Bauteile übereinstimmende Bezugszeichen verwendet.

In den Figuren sind unterschiedliche Ausgestaltungen von Vorrichtungen zum Verschweißen zweier sich überlappender und auf einer Seite eines Gutstapels 1 befindlicher Folienabschnitte zum Bilden einer Umhüllung dargestellt.

Die Umhüllung ist in den Figuren nicht dargestellt. Üblicherweise besteht die Umhüllung aus einer Deckblattfolie, die auf die Oberseite eines Gutstapels 1 gelegt wird. Üblicherweise wird anschließend dann eine Folienbanderole um den Gutstapel 1 gezogen, wobei die Folienbanderole oben und unten offen ausgebildet ist. Die Folienbanderole steht dabei unter Bildung eines Folienüberstandes über die Oberseite des Gutstapels 1 über. Sofern die Umhüllung beispielsweise einen Regenschutz bieten soll, wird der Folienüberstand nach dem Umlegen auf die Oberseite mit der Deckblattfolie verschweißt.

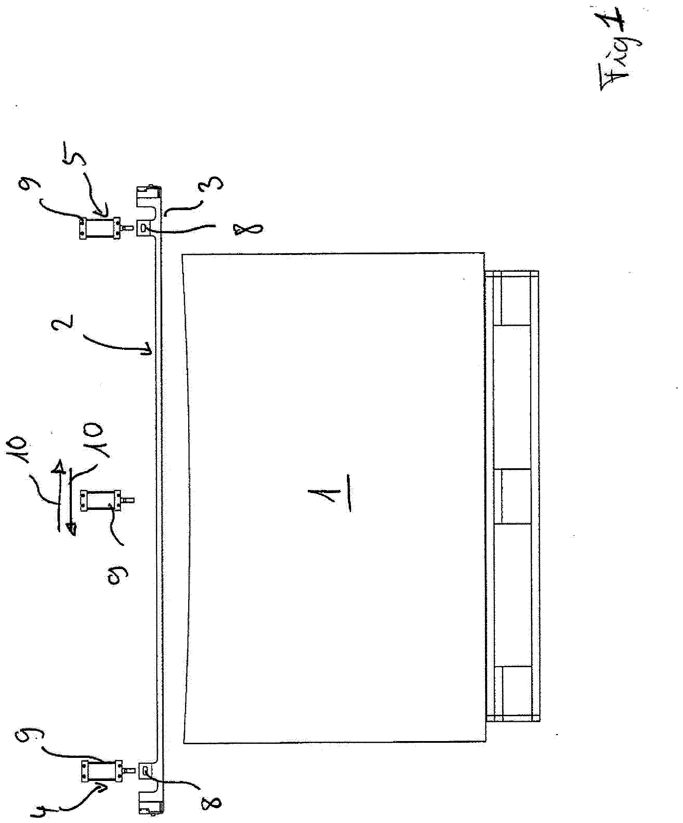

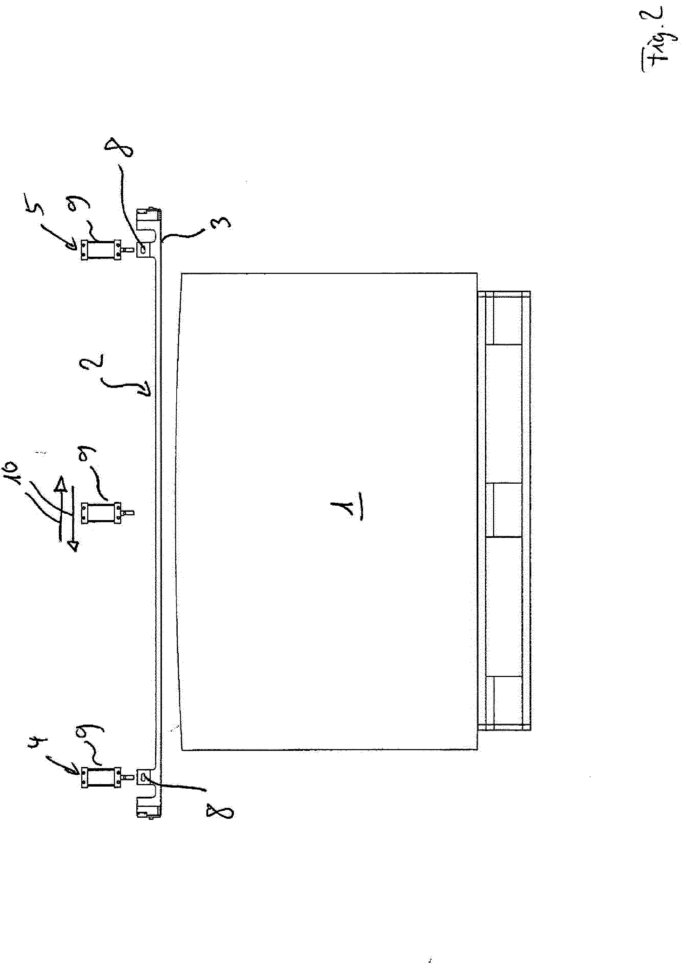

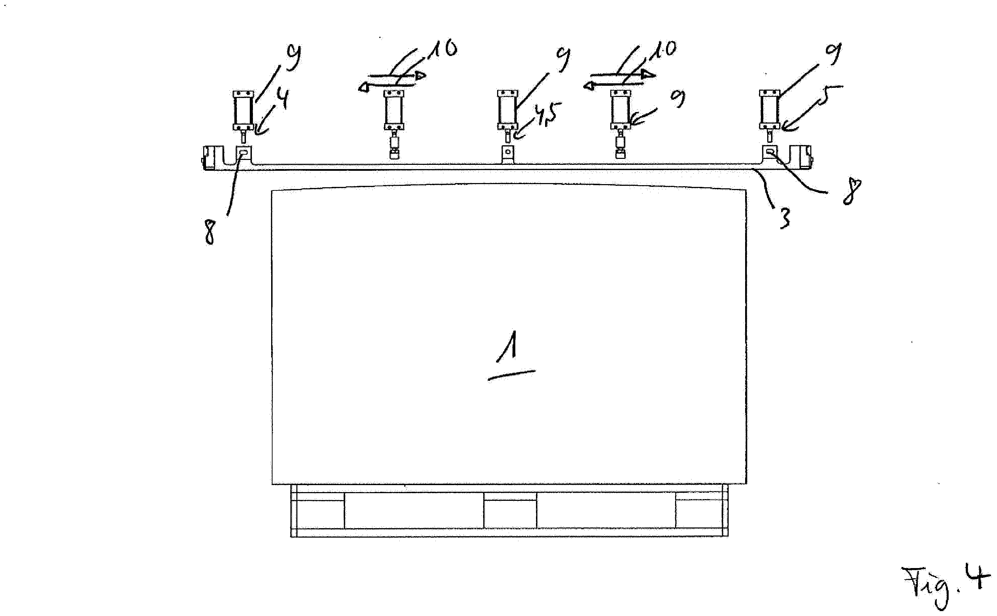

Die Oberseite des in den Fig. 1, 3 und 5 dargestellten Gutstapels 1 weist eine mittige Kuhle auf und ist damit konkav ausgebildet. In den Fig. 2 und 4 ist ein Gutstapel 1 mit einer gewölbt und damit konvex ausgebildeten Oberseite dargestellt.

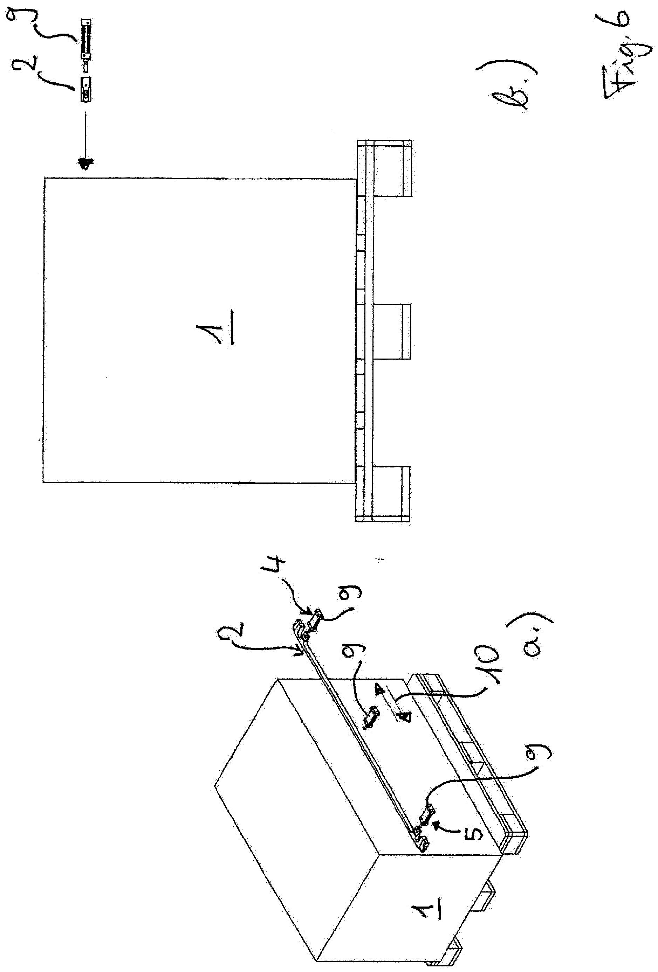

Bei dem Ausführungsbeispiel nach den Fig. 6a und 6b werden die Folienabschnitte auf einer Längsseite des Gutstapels 1 miteinander verschweißt. Hierfür ist die Deckblattfolie größer als die Oberseite des Gutstapels 1. Die überstehenden Ränder der Deckblattfolie werden um die obere Kante des Gutstapels 1 vor dem Überziehen der Folienbanderole umgelegt.

Die Vorrichtung umfasst einen Schweißbalken 2 mit einer in Richtung der zu verschweißenden Folienabschnitte ausgerichteten Schweißfläche 3, wobei der Schweißbalken 2 im Bereich seiner beiden Enden jeweils eine Lagerung 4, 5 aufweist.

Zum Verschweißen der zu verschweißenden Folienabschnitte kann der Abstand zwischen dem Schweißbalken 2 und den zu verschweißenden Folienabschnitten bis hin zum Kontakt verringert werden. Bei den Ausführungsbeispielen nach den Fig. 1 bis 4 wird der Schweißbalken 2 so weit in Richtung der Oberseite des Gutstapels 1 abgesenkt, bis die Schweißfläche 3 des Schweißbalkens 2 mit den zu verschweißenden Folienabschnitten des Gutstapels 1 in Kontakt ist.

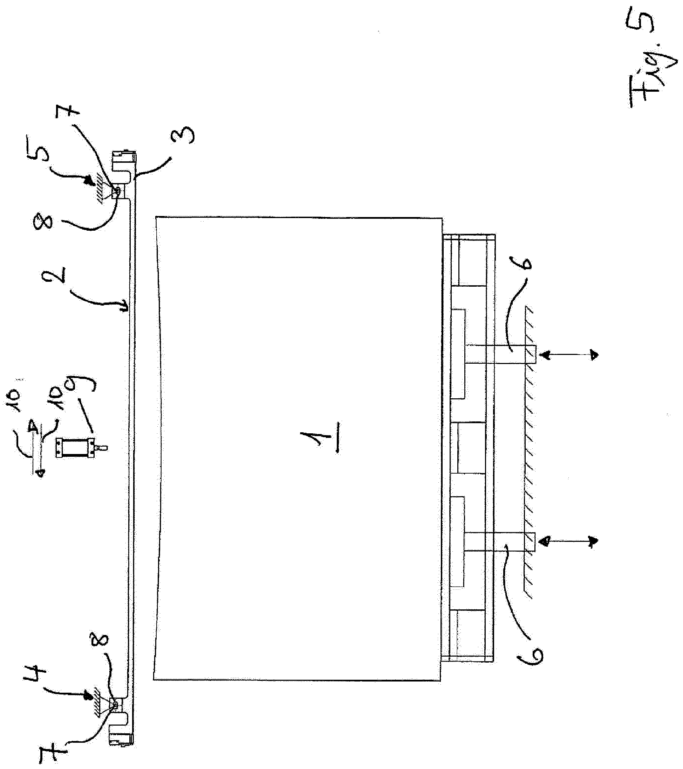

Bei der in Fig. 5 dargestellten Ausgestaltung ist der Schweißbalken 3 nicht vertikal verfahrbar. Daher weist die Vorrichtung ferner eine als Hebeeinrichtung 6 ausgebildete Gutstapelverlagerungseinrichtung zum Verlagern des Gutstapels 1 in Richtung des Schweißbalkens 2 zum Verschweißen auf. Zum Verschweißen wird der Gutstapel 1 mittels der Hebeeinrichtung 6 angehoben, bis der Gutstapel 1 im Bereich seiner gegenüberliegenden oberen Kante mit der Schweißfläche 3 des Schweißbalkens 2 in Kontakt kommt.

In Fig. 6 ist eine Ausgestaltung dargestellt, die zum Verschweißen zweier Folienabschnitte im Bereich einer Seite des Gutstapels 1 geeignet ist. Bei einer solchen Ausgestaltung wird entweder der Schweißbalken 2 seitlich gegen den Gutstapel 1 gefahren. Alternativ oder zusätzlich kann der Schweißbalken 2 auch ortsfest angeordnet sein und der Gutstapel 1 kann beispielsweise mittels einer Fördereinrichtung gegen den Schweißbalken 2 verfahren werden.

Jeder Schweißbalken 2 weist im Bereich seiner beiden Enden jeweils eine Lagerung 4, 5 auf. Bei der Ausgestaltung nach Fig. 5 ist jede Lagerung 4, 5 als ortsfest angeordnetes Lager ausgebildet. Jedes Lager weist einen Bolzen 7 auf, der in einem dem Schweißbalken 2 zugeordneten Langloch 8 geführt ist. Damit ist der Schweißbalken 2 zumindest in einem geringen Maße drehbar und verschiebbar gelagert, so dass der Schweißbalken 2 nach unten oder nach oben durchgebogen werden kann.

Zur Anpassung des Verlaufs der Schweißfläche 3 an einen konkaven und/oder an einen konvexen Verlauf der Seite des Gutstapels 1 zwischen den beiden Lagerungen 4, 5 ist bei der Ausgestaltung nach Fig. 5 eine in Richtung der zu verschweißenden Folienabschnitte wirkende Verlagerungseinrichtung 9 vorgesehen. Die Vorrichtung umfasst für die Verlagerungseinrichtung 9 eine nicht dargestellte Steuerung, so dass die Verlagerungseinrichtung 9 individuell steuerbar ist. Damit kann die Krümmung des Schweißbalkens 2 für das anschließende Verschweißen der überlappenden Folienabschnitte an die Kontur der in diesem Fall konkaven Oberseite des Gutstapels 1 im Bereich der miteinander zu verschweißenden Folienabschnitte angepasst werden.

Bei den Ausgestaltungen nach den Fig. 1 bis 4 sind auch die beiden im Bereich der beiden Enden des Schweißbalkens 2 vorgesehenen Lagerungen 4, 5 selbst jeweils als Verlagerungseinrichtung 9 ausgebildet, so dass hierdurch der Schweißbalken 2 aus seiner Ruhestellung, in welcher der Schweißbalken 2 - wie in den Figuren dargestellt - in einem Abstand zu den zu verschweißenden Folienabschnitten angeordnet ist, in Richtung der Oberseite des Gutstapels 1 in seine Schweißposition, in der der Schweißbalken 2 mit dem oberen Folienabschnitt der beiden sich überlappenden und miteinander zu verschweißenden Folienabschnitte in Kontakt ist, verfahrbar ist. Die Vorrichtung umfasst auch für diese Verlagerungseinrichtungen 9 eine Steuerung, wobei jede Verlagerungseinrichtung 9 des Schweißbalkens 2 individuell steuerbar ist, so dass die Krümmung des Schweißbalkens 2 für das anschließende Verschweißen der überlappenden Folienabschnitte an die Kontur der Seite des Gutstapels 1 im Bereich der miteinander zu verschweißenden Folienabschnitte anpassbar ist. Bei einer derartigen Ausgestaltung kann der Gutstapel 1 beispielsweise auf einem Kettenförderer beim Verschweißen abgestellt bleiben, da der Schweißbalken 2 an den Gutstapel 1 herangefahren wird.

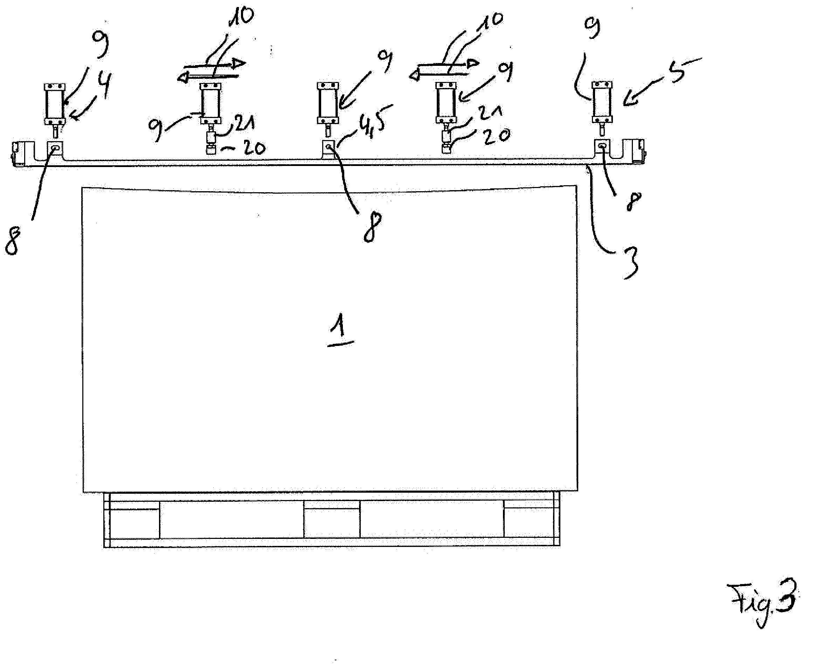

Die Ausführungsbeispiele nach den Fig. 1 und 2 einerseits und nach den Fig. 3 und 4 andererseits unterscheiden sich dadurch, dass die Vorrichtung nach den Fig. 1 und 2 nur im Bereich der beiden Enden des Schweißbalkens 2 eine als Lagerung 4, 5 ausgebildete Verlagerungseinrichtung 9 aufweist.

Bei dem Ausführungsbeispiel nach den Fig. 3 und 4 ist in der Mitte eine dritte als Lagerung ausgebildete Verlagerungseinrichtung 9 vorgesehen, die insoweit mittig an dem Schweißbalken 2 angreift. Bei diesem Ausführungsbeispiel stellen insoweit die drei als Lagerung ausgebildeten Verlagerungseinrichtungen 9, die jeweils über den Bolzen 7 und das Langloch 8 direkt mit dem Schweißbalken 2 verbunden sind, insoweit eine Basis zum Anheben und zum Absenken des Schweißbalkens 2 dar.

Sowohl in dem Ausführungsbeispiel nach den Fig. 1 und 2 als auch in dem Ausführungsbeispiel nach den Fig. 3 und 4 ist zwischen zwei benachbarten als Lagerung 4, 5 ausgebildeten Verlagerungseinrichtungen 9 zur Anpassung des Verlaufs der Schweißfläche 3 an einen konkaven und/oder an einen konvexen Verlauf der Seite des Gutstapels 1 jeweils eine in Richtung der zu verschweißenden Folienabschnitte wirkende Verlagerungseinrichtung 9 zugeordnet. Die Vorrichtung umfasst für jede Verlagerungseinrichtung 9 eine Steuerung, so dass jede Verlagerungseinrichtung 9 des Schweißbalkens 2 individuell steuerbar ist. Damit kann die Krümmung des Schweißbalkens 2 für das anschließende Verschweißen der überlappenden Folienabschnitte an die Kontur der Seite des Gutstapels im Bereich der miteinander zu verschweißenden Folienabschnitte angepasst werden.

Wie den Fig. 1 bis 4 zu entnehmen ist, ist sowohl bei der Ausgestaltung nach den Fig. 1 und 2 als auch bei der Ausgestaltung nach den Fig. 3 und 4 zwischen zwei benachbarten als Lagerung 4, 5 ausgebildeten Verlagerungseinrichtungen 9 eine weitere Verlagerungseinrichtung 9 vorgesehen. Jede weitere Verlagerungseinrichtung 9 wirkt in Richtung der zu verschweißenden Folienabschnitte und dient zur Anpassung des Verlaufs der Schweißfläche 3 an einen konkaven und/oder an einen konvexen Verlauf der Seite, in diesem Fall der Oberseite, des Gutstapels 1. Bei jeder weiteren Verlagerungseinrichtung 9 ist der Kontaktbereich, mit dem diese Verlagerungseinrichtung 9 auf den Schweißbalken 2 wirkt, in Längserstreckung des Schweißbalkens 2 gesehen entlang des Schweißbalkens 2 verlagerbar. Die Vorrichtung umfasst für jede weitere Verlagerungseinrichtung 9 eine Steuerung, wobei jede weitere Verlagerungseinrichtung 9 des Schweißbalkens 2 individuell steuerbar ist, so dass die Krümmung des Schweißbalkens 2 für das anschließende Verschweißen der überlappenden Folienabschnitte an die Kontur der Seite des Gutstapels 1 im Bereich der miteinander zu verschweißenden Folienabschnitte anpassbar ist. Insbesondere die Ausgestaltung nach den Fig. 3 und 4 erlaubt eine sehr gute Anpassung der Schweißfläche 3 an eine Oberseite eines Gutstapels 1, selbst wenn die Oberseite in Längsrichtung des Schweißbalkens 2 gesehen konvexe und konkave Bereiche aufweist.

Bei der in Fig. 5 dargestellten Ausgestaltung wird der Gutstapel 1 zum Verschweißen mittels der Hebeeinrichtung 6 angehoben, bis der Gutstapel 1 im Bereich seiner gegenüberliegenden oberen Kante mit der Schweißfläche 3 des Schweißbalkens 2 in Kontakt kommt. Dann wird die Verlagerungseinrichtung 9 aktiviert, sodass der Schweißbalken 2 im Bereich seiner Mitte in Richtung der Oberseite des Gutstapels 1 heruntergedrückt wird. Infolgedessen wird die Schweißfläche 3 dem konkaven Verlauf der Oberseite des Gutstapels 1 angepasst und damit auf ganzer Länge der Schweißfläche 3 eine gutes Schweißergebnis erzielt.

Wie durch die Pfeile 10 angedeutet, ist die Verlagerungseinrichtung 9 horizontal verfahrbar. Damit kann der Kontaktbereich, d. h. die Stelle, in der die Verlagerungseinrichtung 9 auf den Schweißbalken 2 wirkt, in Längserstreckung des Schweißbalkens 2 gesehen entlang des Verlaufs des Schweißbalkens 2 verlagert und eingestellt werden. Damit kann die Vorrichtung optimal an den jeweiligen Verlauf der Oberseite des Gutstapels 1 angepasst werden.

Wie die Figuren zeigen, ist die Bewegungsrichtung jeder Verlagerungseinrichtung 9 ausschließlich orthogonal zur Ausrichtung der Seite des Gutstapels 1, an der sich die zu verschweißenden Folienabschnitte befinden. Der Verlagerungs- und Schweißvorgang wird am Beispiel der Fig. 1 und 2 erläutert. Bei der Ausgestaltung der Oberseite des Gutstapels 1 nach Fig. 1 wird der Schweißbalken 2 zunächst durch die zwei als Lagerung 4, 5 ausgebildeten Verlagerungseinrichtungen 9 so weit abgesenkt, bis der Schweißbalken 2 die beiden gegenüberliegenden Kanten des Gutstapels 1 berührt. Ein weiteres Absenken der zwei als Lagerung 4, 5 ausgebildeten Verlagerungseinrichtungen 9 ist nicht möglich. In der Mitte des Gutstapels 1 ist der Schweißbalken 2 jedoch noch nicht in Kontakt mit dem Gutstapel 1. Dann wird die zwischen den beiden Lagerungen 4, 5 angeordnete und in Richtung der zu verschweißenden Folienabschnitte wirkende Verlagerungseinrichtung 9 aktiviert. Diese drückt den Schweißbalken 2 in der Mitte so weit herunter, bis der Schweißbalken 2 auch hier den Folienabschnitt berührt. In dieser Stellung (Schweißposition) ist der Schweißbalken 2 gekrümmt und folgt dem konkaven Verlauf der Oberseite des Gutstapels 1.

Bei der Ausgestaltung der Oberseite des Gutstapels 1 nach Fig. 2 wird der Schweißbalken 2 wiederum durch die zwei als Lagerung 4, 5 ausgebildeten Verlagerungseinrichtungen 9 abgesenkt. Beim Absenken kommt der Schweißbalken 2 zunächst in der Mitte mit dem Gutstapel 1 in Kontakt. Da der Schweißbalken 2 im Bereich der beiden Lagerungen 4, 5 noch nicht in Kontakt mit der Oberseite des Gutstapels 1 ist, verlagern die zwei als Lagerung 4, 5 ausgebildeten Verlagerungseinrichtungen 9 den Schweißbalken 2 weiter in Bewegungsrichtung, d. h. orthogonal zur Ausrichtung der Seite des Gutstapels 1, an der sich die zu verschweißenden Folienabschnitte befinden. Das Absenken erfolgt so lange, bis der Schweißbalken 1 den Gutstapel 1 auch im Bereich der gegenüberliegenden Kanten berührt. Durch das Absenken hat sich der Schweißbalken 1 um die konvex ausgebildete Oberseite des Gutstapels 1 angelegt und liegt insoweit auf ganzer Länge auf. In dieser Stellung (Schweißposition) ist der Schweißbalken 2 gekrümmt und folgt dem konvexen Verlauf der Oberseite des Gutstapels 1. Bei dieser Ausgestaltung der Oberseite des Gutstapels 1 ist der Einsatz der zwischen den beiden Lagerungen 4, 5 angeordneten und in Richtung der zu verschweißenden Folienabschnitte wirkenden Verlagerungseinrichtung 9 nicht unbedingt erforderlich, wenn der durch die zwei als Lagerung 4, 5 ausgebildeten Verlagerungseinrichtungen 9 erzeugte Anpressdruck hinreichend groß ist. Je nach Länge des Schweißbalkens 2 kann der Anpressdruck der Schweißfläche 3 auf die zu verschweißenden Folienabschnitte auf der Strecke zwischen zwei als Lagerung 4, 5 ausgebildeten Verlagerungseinrichtungen 9 zu gering sein. Dann kann das Schweißergebnis dadurch verbessert werden, wenn ergänzend zumindest eine zwischen zwei benachbarten als Lagerungen 4, 5 ausgebildete Verlagerungseinrichtungen 9 angeordnete und in Richtung der zu verschweißenden Folienabschnitten wirkende Verlagerungseinrichtung 9 unterstützt.

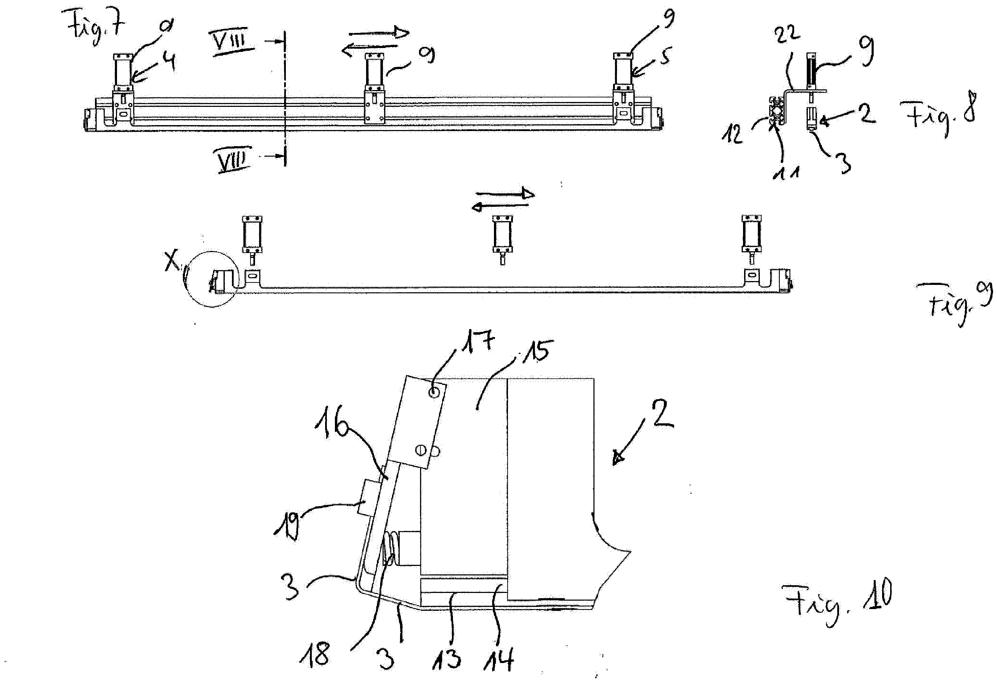

Wie den Fig. 7 und 8 zu entnehmen ist, ist die Verlagerungseinrichtung 9 verschiebbar an einer Schiene 11 angeordnet. Die Schiene 11 weist in dem dargestellten Ausführungsbeispiel an ihren vier Seiten jeweils zumindest eine sich längs der Schiene 11 erstreckende hinterschnittene Nut 12 auf. In der auf der rechten Seite der Schiene 11 angeordneten Nut 12 ist zumindest ein Nutstein geführt, der an einem Winkel 22 befestigt ist. An dem Winkel 22 ist die Verlagerungseinrichtung 9 befestigt.

Bei der dargestellten Ausgestaltung kann die Verlagerungseinrichtung 9 manuell in der Schiene 11 und damit längs des Schweißbalkens 2 in Richtung der Längserstreckung verschoben werden. Die Position der Verlagerungseinrichtung 9 kann damit an die Kontur des Gutstapels 1 angepasst werden. Da beispielsweise in Fig. 1 die tiefste Stelle der Kuhle in der Mitte der Oberseite angeordnet ist, ist die Verlagerungseinrichtung 9 so ausgerichtet, dass sich die Verlagerungseinrichtung 9 oberhalb der tiefsten Stelle befindet.

In den dargestellten Ausführungsbeispielen ist jede Verlagerungseinrichtung 9 als Zylinder ausgebildet. Bei dem Zylinder kann es sich beispielsweise um einen Pneumatikzylinder oder um einen Hydraulikzylinder handeln.

In Bezug auf die Fig. 1 bis 4 sowie 6 und 9 darf angemerkt werden, dass die als Lagerungen 4, 5 ausgebildeten Verlagerungseinrichtungen 9 selbstverständlich mit dem Schweißbalken 2 verbunden sind. So weisen die Verlagerungseinrichtungen 9 an ihrem freien Ende eine Schraube auf, die in dem dem Schweißbalken 2 zugeordneten Langloch 8 geführt ist. Bezogen beispielsweise auf die Ausgestaltung nach Fig. 1, können die beiden als Lagerungen 4, 5 ausgebildeten Verlagerungseinrichtungen 9 den Schweißbalken 2 hoch und runter bewegen, während die in der Mitte angeordnete Verlagerungseinrichtung 9 den Schweißbalken 2 nur nach unten drücken kann.

Der grundsätzliche Aufbau des Schweißbalkens 2 ist in den Fig. 8 bis 12 dargestellt. Der Schweißbalken 2 ist als biegsame, vorzugsweise aus Aluminium bestehende, Schiene mit der in Richtung der zu verschweißenden Folienabschnitte ausgerichteten Schweißfläche 3 ausgebildet. Daher ist vorliegend der Schweißbalken 2 und damit auch die Schweißfläche 3 zur Anpassung der Schweißfläche 3 an einen konkaven Verlauf und/oder an einen konvexen Verlauf der Seite des Gutstapels 1 zwischen ihren beiden Enden elastisch verformbar ausgebildet. Die Schweißfläche 3 ist als Schweißdraht ausgebildet.

Der Schweißdraht ist zwischen den beiden Enden des Schweißbalkens 2 gespannt, wobei der Schweißdraht entlang einer in Richtung der zu verschweißenden Folienabschnitte ausgerichteten Andrückfläche 13 geführt und durch eine Isolationsschicht 14 von der Andrückfläche 13 isoliert ist. Die Andrückfläche 13 und die Isolationsschicht 14 können zweiteilig ausgebildet sein. Es ist aber auch durchaus möglich, dass die Andrückfläche 13 die Isolationsschicht 14 selbst bildet. Dann kann die Andrückfläche 13 beispielsweise als Silikonband ausgebildet sein. Das Silikonband dient der Isolierung der Schweißfläche 3 von dem Schweißbalken 2.

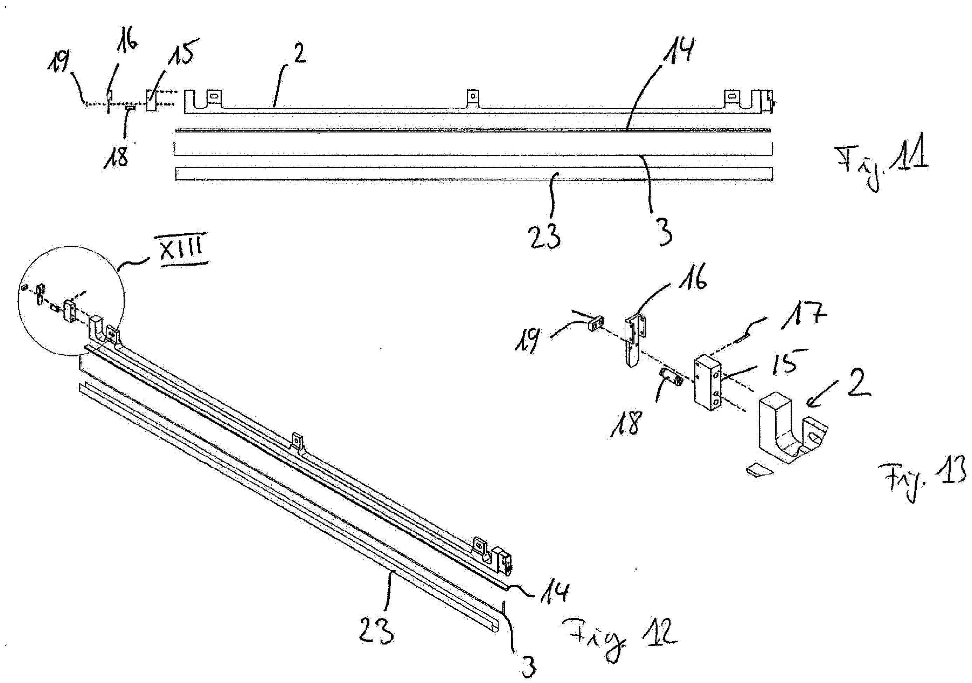

Um ein Verkleben des Schweißdrahtes mit dem zu verschweißenden Folienabschnitt zu vermeiden, ist der Schweißdraht mit einer als Schutzschicht dienenden Ummantelung 23 versehen. Wie Fig. 12 zu entnehmen ist, ist die Ummantelung 23 als U-förmige Schiene ausgebildet, die nach dem Anbringen des Schweißdrahtes auf den Schweißbalken 2 aufgesteckt wird. Die Ummantelung kann alternativ aber auch als PTFE-Klebeband ausgebildet sein. Bei einer solchen Ausgestaltung wird der untere Bereich des Schweißbalkens 2 mit dem PTFE-Klebeband eingeschlagen.

Wie insbesondere der Detailzeichnung nach Fig. 10 zu entnehmen ist, weist die Schiene des Schweißbalkens 2 eine geringe Höhe auf, sodass die Schiene leicht elastisch verformbar ist und sich insoweit an die Kontur des Gutstapels 1 anpassen kann. Der Schweißbalken 2 weist die in Richtung der zu verschweißenden Folienabschnitte ausgerichtete Andrückfläche 13 auf. Die Schweißfläche 3 ist als ein zwischen den beiden Enden des Schweißbalkens 1 gespannter Schweißdraht ausgebildet, der entlang der Andrückfläche 13 geführt ist und durch die Isolationsschicht 14 von der Andrückfläche 13 isoliert ist. Die Isolationsschicht 14 ist zwischen der als Schweißdraht ausgebildeten Schweißfläche 3 und dem Schweißbalken 2 angeordnet und ist in dem dargestellten Ausführungsbeispiel als ein trapezförmiges Silikonband ausgebildet. Die Unterseite der Isolationsschicht 14 bildet gleichzeitig die Andrückfläche 13.

Außenseitig ist auf jedes Ende der Schiene ein Endstück 15, das beispielsweise aus Kunststoff besteht, montiert. Zum Spannen des Schweißdrahtes ist an jedem Ende ein Spannelement 16 vorgesehen, das um eine Drehachse 17 verlagerbar angeordnet ist. Die Drehachse 17 ist im oberen Bereich des Endstücks 15 vorgesehen. Im unteren Bereich der Stirnseite des Endstücks 15 ist eine Ausnehmung vorgesehen, in die eine Druckfeder 18 eingeführt ist. Mittels dieser Druckfeder 18 wird das Spannelement 16 im unteren Bereich von dem Schweißbalken 2 weggedrückt. Der Schweißdraht ist mittels eines Klemmelementes 19, bei dem es sich in dem dargestellten Fall um ein durch zwei Schrauben gesichertes Plättchen handelt, an dem Spannelement 16 befestigt. Durch die Druckfeder 18 wird jedes Spannelement 16 von dem Schweißbalken 2 weggedrückt und damit der Schweißdraht gespannt.

Bei der Ausgestaltung beispielsweise nach Fig. 3 weist das auf den Schweißbalken 2 wirkende freie Ende der Verlagerungseinrichtung 9 noch ein Druckstück 20 aus Gummi auf, das mittels eines Verlängerungselementes 21 an der Verlagerungseinrichtung 9 befestigt ist.

## Patentansprüche

1. Vorrichtung zum Verschweißen zweier sich überlappender und auf einer Seite eines Gutstapels (1), vorzugsweise auf der Oberseite eines Gutstapels (1), befindlicher Folienabschnitte zum Bilden einer Umhüllung, wobei die Vorrichtung einen Schweißbalken (2) mit einer in Richtung der zu verschweißenden Folienabschnitte ausgerichteten Schweißfläche (3) aufweist, wobei der Schweißbalken (2) zumindest im Bereich seiner beiden Enden jeweils eine Lagerung (4, 5) aufweist und wobei zum Verschweißen der Folienabschnitte der Abstand zwischen dem Schweißbalken (2) und den zu verschweißenden Folienabschnitten bis hin zum Kontakt verringerbar ist, **dadurch gekennzeichnet, dass** zumindest die Schweißfläche (3) des Schweißbalkens (2) zur Anpassung der Schweißfläche (3) an einen konkaven Verlauf und/oder an einen konvexen Verlauf der Seite des Gutstapels (1) zwischen ihren beiden Enden elastisch verformbar ausgebildet ist und dass dem Schweißbalken (2) zwischen den beiden Lagerungen (4, 5) zur Anpassung des Verlaufs der Schweißfläche (3) an einen konkaven und/oder an einen konvexen Verlauf der Seite des Gutstapels (1) wenigstens eine, vorzugsweise zumindest in Richtung der zu verschweißenden Folienabschnitte wirkende, Verlagerungseinrichtung (9) zugeordnet ist und dass bei zumindest einer Lagerung (4, 5) und/oder bei zumindest einer Verlagerungseinrichtung (9) der Kontaktbereich, mit dem diese Lagerung (4, 5) bzw. diese Verlagerungseinrichtung (9) auf den Schweißbalken (2) wirkt, in Längserstreckung des Schweißbalkens (2) gesehen entlang des Schweißbalkens (2) verlagerbar ist, und dass die Vorrichtung für zumindest eine Verlagerungseinrichtung (9), vorzugsweise für alle Verlagerungseinrichtungen (9), eine Steuerung umfasst, wobei jede Verlagerungseinrichtung (9) des Schweißbalkens (2) individuell steuerbar ist, so dass die Krümmung des Schweißbalkens (2) für das anschließende Verschweißen der überlappenden Folienabschnitte an die Kontur der Seite des Gutstapels (1) im Bereich der miteinander zu verschweißenden Folienabschnitte anpassbar ist.

2. Vorrichtung nach dem vorhergehenden Anspruch, **dadurch gekennzeichnet, dass** die Vorrichtung ferner eine Gutstapelverlagerungseinrichtung, vorzugsweise eine als Hebeeinrichtung (6) ausgebildete Gutstapelverlagerungseinrichtung, zum Verlagern des Gutstapels (1) in Richtung des Schweißbalkens (2) zum Verschweißen aufweist.

3. Vorrichtung nach einem der vorhergehenden Ansprüche, **dadurch gekennzeichnet, dass** zumindest eine der beiden Lagerungen (4, 5), vorzugsweise beide Lagerungen (4, 5), zur Verlagerung des Schweißbalkens (2) aus seiner Ruhestellung, in welcher der Schweißbalken (2) in einem Abstand zu den zu verschweißenden Folienabschnitten angeordnet ist, in Richtung der Seite des Gutstapels (1) in seine Schweißposition, in der der Schweißbalken (2) mit dem oberen Folienabschnitt der beiden sich überlappenden und miteinander zu verschweißenden Folienabschnitte in Kontakt ist, als Verlagerungseinrichtung (9) ausgebildet ist (sind), wobei die Vorrichtung für zumindest eine Verlagerungseinrichtung (9), vorzugsweise für alle Verlagerungseinrichtungen (9), eine Steuerung umfasst, wobei jede Verlagerungseinrichtung (9) des Schweißbalkens (2) individuell steuerbar ist, so dass die Krümmung des Schweißbalkens (2) für das anschließende Verschweißen der überlappenden Folienabschnitte an die Kontur der Seite des Gutstapels (1) im Bereich der miteinander zu verschweißenden Folienabschnitte anpassbar ist.

4. Vorrichtung nach einem der vorhergehenden Ansprüche, **dadurch gekennzeichnet, dass** der Schweißbalken (2) als biegsame, vorzugsweise aus Aluminium bestehende, Schiene mit der in Richtung der zu verschweißenden Folienabschnitte ausgerichteten Schweißfläche (3) ausgebildet ist.

5. Vorrichtung nach einem der vorhergehenden Ansprüche, **dadurch gekennzeichnet, dass** die Schweißfläche (3) als Schweißdraht ausgebildet ist.

6. Vorrichtung nach dem vorhergehenden Anspruch, **dadurch gekennzeichnet, dass** der Schweißdraht zwischen den beiden Enden des Schweißbalkens (2) gespannt ist, wobei der Schweißdraht entlang einer in Richtung der zu verschweißenden Folienabschnitte ausgerichteten Andrückfläche (13) geführt ist.

7. Vorrichtung nach dem vorhergehenden Anspruch, **dadurch gekennzeichnet, dass** der Schweißdraht durch eine Isolationsschicht (14) von der Andrückfläche (13) isoliert ist.

8. Vorrichtung nach einem der vorhergehenden Ansprüche, **dadurch gekennzeichnet, dass** zumindest eine Lagerung (4, 5) und/oder zumindest eine Verlagerungseinrichtung (9) zur Verlagerung des Kontaktbereichs, mit dem diese Lagerung (4, 5) bzw. diese Verlagerungseinrichtung (9) auf den Schweißbalken (2) wirkt, verschiebbar an einer Schiene (11) angeordnet ist (sind).

9. Vorrichtung nach dem vorhergehenden Anspruch, **dadurch gekennzeichnet, dass** zumindest eine Schiene (11) eine sich längs der Schiene (11) erstreckende hinterschnittene Nut (12) aufweist und dass die Lagerung (4, 5) und/oder die Verlagerungseinrichtung (9) jeweils zumindest einen mit der Nut (12) zusammenwirkenden und in der Nut (12) geführten Nutstein aufweist.

10. Vorrichtung nach einem der vorhergehenden Ansprüche, **dadurch gekennzeichnet, dass** zumindest eine Lagerung (4, 5) und/oder zumindest eine Verlagerungseinrichtung (9) manuell verlagerbar ist (sind).

11. Vorrichtung nach einem der vorhergehenden Ansprüche, **dadurch gekennzeichnet, dass** zumindest eine Lagerung (4, 5) und/oder zumindest eine Verlagerungseinrichtung (9) motorisch verlagerbar ist (sind).

12. Vorrichtung nach einem der vorhergehenden Ansprüche, **dadurch gekennzeichnet, dass** zumindest eine Verlagerungseinrichtung (9) als Zahnstange ausgebildet ist.

13. Vorrichtung nach einem der Ansprüche, **dadurch gekennzeichnet, dass** zumindest eine Verlagerungseinrichtung (9) als Zylinder ausgebildet ist.

14. Vorrichtung nach dem vorhergehenden Anspruch, **dadurch gekennzeichnet, dass** zumindest ein Zylinder als Pneumatikzylinder ausgebildet ist.

15. Vorrichtung nach einem der beiden vorhergehenden Ansprüche, **dadurch gekennzeichnet, dass** zumindest ein Zylinder als Hydraulikzylinder ausgebildet ist.

## Claims

1. Device for welding two film sections that overlap one another and are located on one side of a stack of goods (1), preferably on the top side of a stack of goods (1), to form a wrapping, wherein the device comprises a welding bar (2) with a welding surface (3) aligned in the direction of the film sections to be welded, wherein the welding bar (2) has a bearing (4, 5) at least in the region of each of its two ends and wherein, to weld the film sections, the distance between the welding bar (2) and the film sections to be welded can be reduced until contact is made, **characterised in that** at least the welding surface (3) of the welding bar (2) is configured to be elastically deformable between its two ends in order to adapt the welding surface (3) to a concave and/or convex contour of the side of the stack of goods (1), and that the welding bar (2) is provided, between the two bearings (4, 5), with at least one displacement device (9) preferably acting at least in the direction of the film sections to be welded in order to adapt the contour of the welding surface (3) to a concave and/or convex contour of the side of the stack of goods (1), and that, in the case of at least one bearing (4, 5) and/or at least one displacement device (9), the contact area with which this bearing (4, 5) or this displacement device (9) acts on the welding bar (2) is displaceable along the welding bar (2) when viewed in the longitudinal direction of the welding bar (2), and that the device comprises a control system for at least one displacement device (9), preferably for all displacement devices (9), wherein each displacement device (9) of the welding bar (2) is individually controllable, so that the curvature of the welding bar (2) can be adapted to the contour of the side of the stack of goods (1) in the region of the film sections to be welded together for the subsequent welding of the overlapping film sections.

2. Device according to the preceding claim, **characterised in that** the device further comprises a stack displacement device, preferably a stack displacement device configured as a lifting device (6), for moving the stack of goods (1) towards the welding bar (2) for welding.

3. Device according to one of the preceding claims, **characterised in that** at least one of the two bearings (4, 5), preferably both bearings (4, 5), is (are) configured as a displacement device (9) in order to move the welding bar (2) from its rest position, in which the welding bar (2) is arranged at a distance from the film sections to be welded, towards the side of the stack of goods (1) into its welding position in which the welding bar (2) is in contact with the upper film section of the two overlapping film sections to be welded together, wherein the device comprises a control system for at least one displacement device (9), preferably for all displacement devices (9), and wherein each displacement device (9) of the welding bar (2) is individually controllable, so that, for the subsequent welding of the overlapping film sections, the curvature of the welding bar (2) can be adapted to the contour of the side of the stack of goods (1) in the region of the film sections to be welded together.

4. Device according to any of the preceding claims, **characterised in that** the welding bar (2) is configured as a flexible rail, preferably made of aluminium, with a welding surface (3) aligned in the direction of the film sections to be welded.

5. Device according to any of the preceding claims, **characterised in that** the welding surface (3) is configured as a welding wire.

6. Device according to the preceding claim, **characterised in that** the welding wire is tensioned between the two ends of the welding bar (2), wherein the welding wire is guided along a pressure surface (13) aligned in the direction of the film sections to be welded.

7. Device according to the preceding claim, **characterised in that** the welding wire is insulated from the pressure surface (13) by an insulating layer (14).

8. Device according to any of the preceding claims, **characterised in that** at least one bearing (4, 5) and/or at least one displacement device (9) for moving the contact area with which this bearing (4, 5) or this displacement device (9) acts on the welding bar (2) is (are) slidably arranged on a rail (11).

9. Device according to the preceding claim, **characterised in that** at least one rail (11) has an undercut groove (12) extending along the rail (11) and **in that** the bearing (4, 5) and/or the displacement device (9) each comprises at least one sliding block interacting with the groove (12) and guided in the groove (12).

10. Device according to any of the preceding claims, **characterised in that** at least one bearing (4, 5) and/or at least one displacement device (9) is (are) manually displaceable.

11. Device according to any of the preceding claims, **characterised in that** at least one bearing (4, 5) and/or at least one displacement device (9) is (are) displaceable by means of a motor.

12. Device according to any of the preceding claims, **characterised in that** at least one displacement device (9) is configured as a gear rack.

13. Device according to any of the preceding claims, **characterised in that** at least one displacement device (9) is configured as a cylinder.

14. Device according to the preceding claim, **characterised in that** at least one cylinder is configured as a pneumatic cylinder.

15. Device according to one of the two preceding claims, **characterised in that** at least one cylinder is configured as a hydraulic cylinder.

## Revendications

1. Dispositif pour le soudage de deux sections de film superposées et situées sur un côté d'une pile de produits (1), de préférence sur la face supérieure d'une pile de produits (1), pour former une enveloppe, le dispositif comprenant une barre de soudage (2) dotée d'une surface de soudage (3) orientée en direction des sections de film à souder, la barre de soudage (2) présentant au moins au niveau de chacune de ses deux extrémités un palier (4, 5), et la distance entre la barre de soudage (2) et les sections de film à souder pouvant être réduite jusqu'au contact pour le soudage des sections de film, **caractérisé en ce qu'**au moins la surface de soudage (3) de la barre de soudage (2) est réalisée de manière déformable de manière élastique pour l'adaptation de la surface de soudage (3) à un profil concave et/ou à un profil convexe du côté de la pile de produits (1) entre ses deux extrémités, et **en ce qu'**à la barre de soudage (2), entre les deux paliers (4, 5), est associée au moins une, de préférence au moins en direction des sections de film à souder agissants, dispositif de déplacement (9) pour l'adaptation du profil de la surface de soudage (3) à un profil concave et/ou à un profil convexe du côté de la pile de produits (1), et **en ce qu'**au moins dans un palier (4, 5) et/ou au moins dans un dispositif de déplacement (9), la zone de contact, avec laquelle ce palier (4, 5) ou cette dispositif de déplacement (9) agit sur la barre de soudage (2), est déplaçable le long de la barre de soudage (2) en vue de la longueur de la barre de soudage (2), et **en ce que** le dispositif comprend pour au moins un dispositif de déplacement (9), de préférence pour tous les dispositifs de déplacement (9), une commande, chaque dispositif de déplacement (9) de la barre de soudage (2) étant commandable individuellement, de sorte que la courbure de la barre de soudage (2) pour le soudage ultérieur des sections de film superposées est adaptable au contour du côté de la pile de produits (1) dans la zone des sections de film à souder ensemble.

2. Dispositif selon la revendication précédente, **caractérisé en ce que** le dispositif comprend en outre un dispositif de déplacement de pile de produits, de préférence un dispositif de déplacement de pile de produits réalisé comme dispositif de levage (6), pour déplacer la pile de produits (1) en direction de la barre de soudage (2) pour le soudage.

3. Dispositif selon l'une des revendications précédentes, **caractérisé en ce qu'**au moins l'un des deux paliers (4, 5), de préférence les deux paliers (4, 5), est réalisé comme dispositif de déplacement (9) pour le déplacement de la barre de soudage (2) de sa position de repos, dans laquelle la barre de soudage (2) est disposée à une distance des sections de film à souder, en direction du côté de la pile de produits (1) dans sa position de soudage, dans laquelle la barre de soudage (2) est en contact avec la section de film supérieure des deux sections de film superposées et à souder ensemble, le dispositif comprenant pour au moins un dispositif de déplacement (9), de préférence pour tous les dispositifs de déplacement (9), une commande, chaque dispositif de déplacement (9) de la barre de soudage (2) étant commandable individuellement, de sorte que la courbure de la barre de soudage (2) pour le soudage ultérieur des sections de film superposées est adaptable au contour du côté de la pile de produits (1) dans la zone des sections de film à souder ensemble.

4. Dispositif selon l'une des revendications précédentes, **caractérisé en ce que** la barre de soudage (2) est réalisée comme un rail flexible, de préférence en aluminium, avec la surface de soudage (3) orientée en direction des sections de film à souder.

5. Dispositif selon l'une des revendications précédentes, **caractérisé en ce que** la surface de soudage (3) est réalisée comme fil de soudage.

6. Dispositif selon la revendication précédente, **caractérisé en ce que** le fil de soudage est tendu entre les deux extrémités de la barre de soudage (2), le fil de soudage étant guidé le long d'une surface d'appui (13) orientée en direction des sections de film à souder.

7. Dispositif selon la revendication précédente, **caractérisé en ce que** le fil de soudage est isolé de la surface d'appui (13) par une couche d'isolation (14).

8. Dispositif selon l'une des revendications précédentes, **caractérisé en ce qu'**au moins un palier (4, 5) et/ou au moins un dispositif de déplacement (9) pour le déplacement de la zone de contact, avec laquelle ce palier (4, 5) ou ce dispositif de déplacement (9) agit sur la barre de soudage (2), est (sont) disposé(s) de manière déplaçable sur un rail (11).

9. Dispositif selon la revendication précédente, **caractérisé en ce qu'**au moins un rail (11) présente une rainure (12) à contre-dépouille s'étendant le long du rail (11), et **en ce que** le palier (4, 5) et/ou le dispositif de déplacement (9) présente(nt) dans chaque cas au moins un coulisseau coopérant avec la rainure (12) et guidé dans la rainure (12).

10. Dispositif selon l'une des revendications précédentes, **caractérisé en ce qu'**au moins un palier (4, 5) et/ou au moins un dispositif de déplacement (9) est (sont) déplaçable manuellement.

11. Dispositif selon l'une des revendications précédentes, **caractérisé en ce qu'**au moins un palier (4, 5) et/ou au moins un dispositif de déplacement (9) est (sont) déplaçable motorisé.

12. Dispositif selon l'une des revendications précédentes, **caractérisé en ce qu'**au moins un dispositif de déplacement (9) est réalisé comme crémaillère.

13. Dispositif selon l'une des revendications, **caractérisé en ce qu'**au moins un dispositif de déplacement (9) est réalisé comme cylindre.

14. Dispositif selon la revendication précédente, **caractérisé en ce qu'**au moins un cylindre est réalisé comme vérin pneumatique.

15. Dispositif selon l'une des deux revendications précédentes, **caractérisé en ce qu'**au moins un cylindre est réalisé comme vérin hydraulique.
